Europäisches Patentamt

European Patent Office

Office européen des brevets

(19)

(11) Veröffentlichungsnummer: **0 359 289 B1**

(12) **EUROPÄISCHE PATENTSCHRIFT**

(45) Veröffentlichungstag der Patentschrift:
18.12.91 Patentblatt 91/51

(51) Int. Cl.$^5$: **F16G 13/06**

(21) Anmeldenummer: **89117256.1**

(22) Anmeldetag: **18.09.89**

(54) **Rollengelenkkette.**

(30) Priorität: **16.09.88 DE 3831489**

(43) Veröffentlichungstag der Anmeldung:
**21.03.90 Patentblatt 90/12**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**EP-A- 0 233 640**
**FR-A- 1 160 703**
**US-A- 4 428 739**
**US-A- 4 494 945**

(73) Patentinhaber: **UNION Sils, van de Loo & Co.
GmbH
Ardeyer Strasse 13/15
W-5758 Fröndenberg/Ruhr (DE)**

(72) Erfinder: **Remmel, Jochen, Dr.
Dorfstrasse 22a
W-5840 Schwerte (DE)**

(74) Vertreter: **Cohausz & Florack Patentanwälte
Postfach 14 01 61 Schumannstrasse 97
W-4000 Düsseldorf 1 (DE)**

## Beschreibung

Die Erfindung betrifft eine Gelenkkette mit paarweise angeordneten Innen- und Außenlaschen, die durch Bolzen miteinander verbunden sind, die in Öffnungen der Innen- und Außenlaschen einliegen, wobei die Ränder der Öffnungen der Innenlaschen zum Ketteninneren hin als Rohrstutzen vorstehen, auf denen zwischen den Innenlaschen liegende Rollen gelagert sind und zwischen deren inneren Stirnseiten ein Dichtring koaxial einliegt.

Es ist bekannt, bei Gelenkketten die Innenlaschen mit Hülsen zu versehen, durch die die Bolzen verlaufen, auf denen die Außenlaschen sitzen. Bei diesen Hülsenketten ist es darüberhinaus bekannt, auf den Hülsen Rollen zu lagern um Reibung und Abnutzung herabzusetzen. Die Hülsen können hierbei von Rohrstutzen gebildet sein, die an den Innenlaschen im Bereich der Öffnungen vorstehen.

In diese bekannten Hülsen- bzw. Rollengelenkketten dringt leicht Schmutz und Staub ein, der den Verschleiß erhöht und die Lebensdauer verringert. Hierzu ist es aus der US-A 4428739 bekannt, zwischen den inneren Stirnseiten beider Rohrstutzen einen Dichtring koaxial einzulegen. Hierdurch wird nicht verhindert, daß von den Außenlaschen her Schmutz zum Bolzen vordringt.

Aus der EP-A-0233640 ist weiters bekannt, eine Rollenkette mit zwischen den Innen- und Außenlaschen auf den Bolzen angeordneten Dichtungsscheiben zu versehen, um die Lagerfläche gegen das Eindringen von Schmutz und dergleichen abzudichten. Bei dieser Anordnung kommt es zu einer Verbreiterung der Kette aufgrund der eingelegten Dichtungsscheiben.

Aufgabe der Erfindung ist es, bei einer Gelenkkette der eingangs genannten Art den Verschleiß zu verringern.

Diese Aufgabe wird erfindungsgemäß durch die kennzeichnenden Merkmale des Anspruches gelöst.

Durch den inneren Dichtring wird der Bereich zwischen Rolle, Innenlasche und Bolzen abgedichtet.

Durch Anordnung der zusätzlichen zwei äußeren Dichtungsringe wird der Bolzen in zwei getrennte Lagerkammern staub- und schmutzfrei abgedichtet. Es wird somit eine Dichtung zwischen den Kettenelementen Bolzen, Innenlasche und Außenlasche erreicht, so daß eine doppelt so große Lebensdauer erzielbar ist. Auch das Dämpfungsverhalten wird erheblich verbessert und aufgrund des minimalen Verschleisses tritt eine sehr geringe Kettenlängung während des Gebrauchs auf.

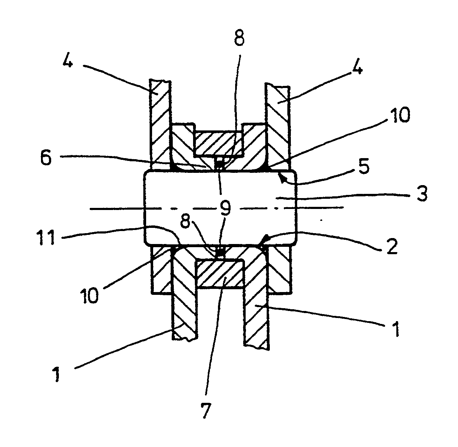

Ein Ausführungsbeispiel der Erfindung ist in der Zeichnung in einem axialen Schnitt durch die Kette in einem Ausschnitt dargestellt.

Die aus Blech gestanzten Innenlaschen 1 der Rollengelenkkette weisen an beiden Enden Öffnungen 2, durch die jeweils ein Bolzen 3 verläuft. An beiden Außenenden des Bolzens 3 sind Außenlaschen 4 mit Öffnungen 5 befestigt.

Die Öffnungen 2 der Innenlaschen 1 weisen auf der der benachbarten Innenlasche zugewandten Seite ausgeformte bzw. angeformte Hülsenabschnitte bzw. Rohrstutzen 6 auf, so daß die beiden Rohrstutzen 6 beider nebeneinanderliegender Innenlaschen 1 eine Hülse bilden, auf der eine Rolle 7 drehbar gelagert ist.

Zwischen den einander zugewandten Stirnseiten 8 beider Rohrstutzen 6 liegt ein Dichtring (O-Ring) 9 ein, der die Rolle 7, die Innenlasche 1 und den Bolzen 3 abdichtet. Die Innenlasche mit durchgezogener Hülse ist hierbei geometrisch so gestaltet, daß die Gesamtkettenbreite der O-Ringkette gleich der Gesambreite der kette ohne O-Ring ist.

Zusätzlich zu den Dichtringen 9 sind weitere Dichtringe (O-Ringe) 10 auf dem Bolzen zwischen den Innenlaschen 1 und den Außenlaschen 4 zu beiden Seiten der Innenlaschen angebracht. Die Dichtringe 10 liegen hierbei in einer ringförmigen Vertiefung im Bereich der Öffnung 2 in der Außenseite der Innenlasche 1 zu einem Teil ein. Diese ringförmige Ausnehmung 11 in der Außenseite der Innenlasche 1 kann beim Stanzen der Innenlaschen 1 und Ausformen der Stutzen 6 mit eingebracht werden.

Durch die Dichtringe 10 werden Bolzen 3, Innenlasche 1 und Außenlasche 4 abgedichtet.

Die erfindungsgemäße Kette wird besonders vorteilhaft als Zweiradkette, insbesondere als Fahrradkette und als Industriekette eingesetzt. Die Dichtringe 9, 10 bestehen vorzugsweise aus elastischem Kunststoff oder Gummi.

## Patentansprüche

1. Gelenkkette mit paarweise angeordneten Innen- (1) und Außenlaschen (4), die durch Bolzen (3) miteinander verbunden sind, die in Öffnungen (2, 5) der Innen- und Außenlaschen einliegen, wobei die Ränder der Öffnungen (2) der Innenlaschen (1) zum Ketteninneren hin als Rohrstutzen (6) vorstehen, auf denen zwischen den Innenlaschen (1) liegende Rollen (7) gelagert sind und zwischen deren inneren Stirnseiten (8) ein Dichtring (9) koaxial einliegt, dadurch gekennzeichnet, daß auf dem Bolzen (3) zwischen Innenlasche (1) und Außenlasche (4) jeweils ein Dichtring (10) liegt, wobei die jeweilige Innenlasche (1) derart geformt ist, daß der jeweilige Dichtring (10) zwischen Innenlasche (1), Außenlasche (4) und Bolzen (3) so angebracht werden kann, daß die Kette durch diesen Dichtring (10) keine Verbreiterung erfährt.

## Claims

1. A plate link chain having inner link plates (1) and outer link plates (4) arranged in pairs and interconnected via pins (3) disposed in openings (2, 5) in the inner and outer link plates, the edges of the openings (2) of the inner link plates (1) projecting towards the inside of the chain in the form of bushes (6) on which rollers (7) lying between the inner link plates (1) are mounted and between whose inner end faces (8) a sealing ring (9) is coaxially disposed, characterized in that a sealing ring (10) is disposed on the pin (3) between the inner link plate (1) and the outer link plate (4) respectively, each inner link plate (1) being so shaped that each sealing ring (10) can be so disposed between the inner link plate (1), the outer link plate (4) and the pin (3) that the chain is not widened by said sealing ring (10).

## Revendications

1. Chaîne à rouleaux avec colliers intérieurs (1) et extérieurs (4) disposés par paires qui sont reliés les uns aux autres par des axes (3) qui sont logés dans des ouvertures (2, 5) des colliers intérieurs et extérieurs, les bords des ouvertures (2) des colliers intérieurs (1) faisant saillie par rapport à l'intérieur de la chaîne sous forme de manchons tubulaires (6) sur lesquels sont montés des rouleaux (7) se trouvant entre les colliers intérieurs (1) et entre les faces frontales (8) desquels est logée coaxialement une bague d'étanchéité (9) caractérisée en ce qu'une bague d'étanchéité (10) est logée à chaque fois sur l'axe (3) entre le collier intérieur (1) et le collier extérieur (4), le collier extérieur (4) respectif étant conformé de telle manière que la bague d'étanchéité (10) respective puisse être montée entre le collier intérieur (1), le collier extérieur (4) et l'axe (3) de telle sorte que la chaîne ne subisse pas d'élargissement par cette bague d'étanchéité (10).